(19) Europäisches Patentamt

**European Patent Office**

**Office européen des brevets**

(11) Veröffentlichungsnummer: **0 325 692 B1**

(12) **EUROPÄISCHE PATENTSCHRIFT**

(45) Veröffentlichungstag der Patentschrift: **15.01.92**

(21) Anmeldenummer: **88116302.6**

(22) Anmeldetag: **01.10.88**

(51) Int. Cl.⁵: **B29C 45/76**

(54) **Verfahren zum Steuerung bzw. Regeln von Spritzgiessmaschinen.**

(30) Priorität: **27.01.88 DE 3802254**

(43) Veröffentlichungstag der Anmeldung:
**02.08.89 Patentblatt 89/31**

(45) Bekanntmachung des Hinweises auf die
Patenterteilung:
**15.01.92 Patentblatt 92/03**

(84) Benannte Vertragsstaaten:
**AT CH FR GB IT LI NL**

(56) Entgegenhaltungen:
**WO-A-79/00351**
**DE-A- 3 611 949**
**FR-A- 2 535 133**

**KUNSTSTOFFE, Band 76, Nr. 11, November
1986, Seiten 1024-1027, Carl Hanser Verlag,
München, DE; H.-J. Graf et al.:
"Prozessregelung beim Elastomerspritzgiessen"**

(73) Patentinhaber: **Klöckner Ferromatik Desma
GmbH**
**Riegeler Strasse 4**
**W-7831 Malterdingen(DE)**

(72) Erfinder: **Gutjahr, Lothar**
**Fahnengasse 10**
**W-7831 Malterdingen(DE)**

(74) Vertreter: **Kiefer, Winfried, Dipl.-Phys.
Klöckner-Werke Aktiengesellschaft Patentabteilung Klöcknerstrasse 29**
**W-4100 Duisburg 1(DE)**

**Beschreibung**

Die Erfindung betrifft ein Verfahren zum Steuern bzw. Regeln von Spritzgießmaschinen, wobei Sensoren Ist-Werte abgeben, Steuerbefehle gebildet und von den Aktoren durchgeführt werden sowie eine Vorrichtung zum Durchführen dieses Verfahrens.

Im allgemeinen wird das Steuern bzw. Regeln von Spritzgießmaschinen in der Weise durchgeführt, dass von einer zentralen Stelle aus sämtliche Daten der Sensoren nach einem Programm verarbeitet werden, die Steuerbefehle und Stellgröße gebildet werden und den Stellgliedern zugeführt werden. Es ist hierbei ein erheblicher Aufwand an Hardware und Software erforderlich.

Auf anderen Gebieten der Technik (z.B. Fernmeldetechnik) ist es bekannt, nach dem Multiplex-Verfahren Steuerungsaufgaben durchzuführen.

In der Datenverarbeitung ist es ebenfalls bekannt, nach diesem Verfahren Daten fern zu übertragen.

Es sind weiterhin Entwicklungen bekannt, durch sogenannte Feldbussysteme Daten seriell zu übertragen (Automatisierungstechnische Praxis atp, 29. Jahrgang, Heft 12/1987, Ziele und Anwendungen von Feldbussystemen).

Es ist weiterhin bekannt, derartige Feldbussysteme für Kfz-Steuergeräte vorzusehen (VDI Bericht Nr. 612, 1986, Seite 459, Bussysteme für Kfz-Steuergeräte).

Bei Spritzgießmaschinen erfordert die Regelung bzw. Steuerung das Verarbeiten einer Fülle von Daten, die bei einer seriellen Verarbeitung oft nicht vernachlässigbare Zeitprobleme mit sich bringen.

Es ist aus diesem Grunde im allgemeinen nicht möglich, die bekannten seriellen Übertragungssysteme einzusetzen.

Die Verarbeitung der Daten auf parallelen Leitungssystemen führt jedoch zu dem aus wirtschaftlichen Gründen nicht mehr vertretbaren Aufwand für die Software und die Hardware.

Der Erfindung liegt die Aufgabe zugrunde, ein Verfahren der eingangs erwähnten Art, sowie eine Vorrichtung zum Durchführen des Verfahrens zu schaffen, welche die Vorteile der seriellen und parallelen Verarbeitung der Daten jedoch nicht ihre Nachteile aufweisen.

Diese Aufgabe wird durch den Anspruch 1 (Verfahren) bzw. den Anspruch 4 gelöst, die Gegenstände der weiteren Ansprüche beinhalten vorteilhafte Weiterbildungen ihrer Gegenstände.

Die Erfindung ist anhand von Ausführungsbeispielen erläutert.

Es zeigen:

Figur 1  schematisch und in Draufsicht eine Spritzgießmaschine mit der im Ausschnitt dargestellten Steuerung bzw. Regelung,

Figur 2  einen weiteren Ausschnitt aus der in Fig. 1 dargestellten Steuerung bzw. Regelung mit weiteren Einzelheiten,

Figur 3  Diagramm zur Erläuterung der Funktionsweise und

Figur 4  ein Ausführungsbeispiel für einen Schnittstellenkoppler.

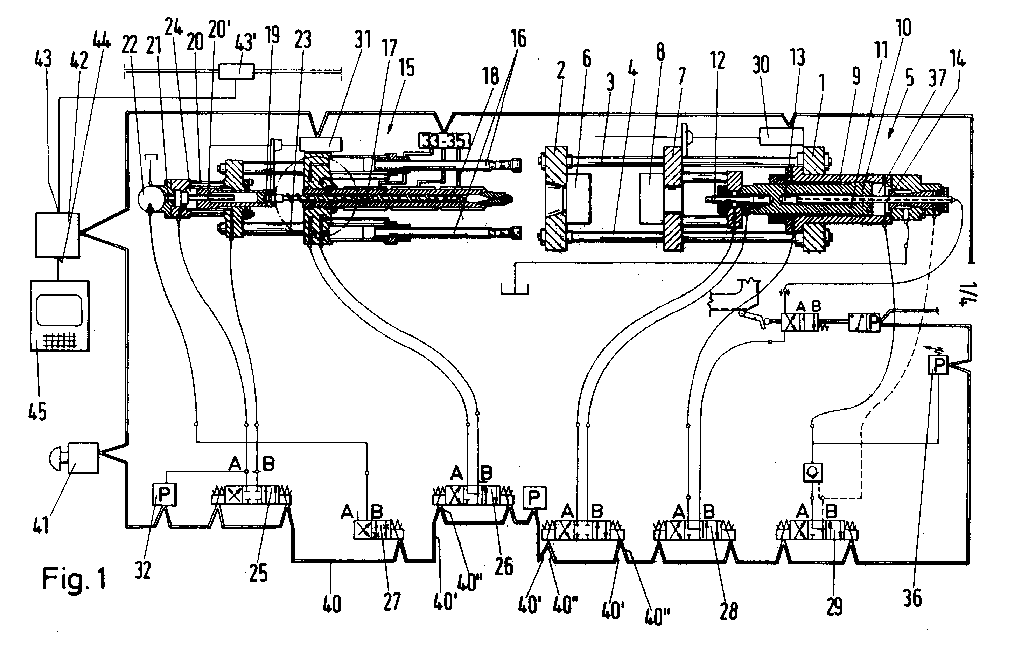

In der Figur 1 ist die Draufsicht einer Spritzgießmaschine dargestellt. Auf einem nicht eingezeichneten Maschinenbett ist ein Rahmen aus zwei Ständerplatten 1 und 2 und 4 mit drei bzw. vier gezeichneten Holmen, von denen nur zwei sichtbar sind, angeordnet.

In die feststehende Ständerplatte 1 ist die Schließeinheit 5 integriert.

Die feststehende Ständerplatte 2 ist sogleich die feststehende Formaufspannplatte, für die eine Hälfte 6 einer zweigeteilten Spritzgießform.

Diese Hälfte 6 ist auf der der Ständerplatte 1 zugewandten Seite der feststehenden Formaufspannplatte angeordnet.

Zwichen den beiden feststehenden Ständerplatten ist auf den Holmen die verschiebbare Formaufspannplatte 7 geführt, die auf ihrer, der anderen Formhälfte zugewandten Seite, die zweite Formhälfte 8 aufweist.

Die Schließeinheit weist einen hydraulischen beidseitig aufschlagbaren hydraulischen Zylinder 9 auf, der einen Kolben 10 führt und deren Konstange 11 in allen Arbeitsstellungen in Richtung zur verschiebbaren Formaufspannplatte vorsteht und einen in ihren freien Endabschnitt integrierten Auswerfer 12 aufweist, der im Prinzip die Kolbenstange eines beidseitig beaufschlagbaren hydraulischen Kolbens ist.

Der Kolben 10 weist eine Bohrung auf, die in eine Sacklochbohrung 13 der Kolbenstange ausläuft. In die Bohrung und die Sacklochbohrung taucht ein Rohr 14 nach dem Prinzip des Tauchkolbens ein, über das hydraulisches Medium der Sacklochbohrung zugeführt oder von ihm weggeführt werden kann.

Die mit 15 bezeichnete Plastifizier-Spritzeinheit weist Fahrzylinder 16 und einen mit ihr gekoppelten Plastifizierzylinder 17 auf, in der die Plastifizier- und Einspritzschnecke 18 angeordnet ist.

Die Plastifizier- und Einspritzschnecke ist mit der Kolbenstange 19 eines beidseitig beaufschlagbaren Arbeitszylinders 20 fest verbunden, die hohl ausgebildet ist und über eine Keilnutverbindung 20 mit der Welle 21 eines Hydromotors 22 axial verschiebbar gekoppelt ist.

Der Plastifizierzylinder weist einen Trichter für die Zufuhr von plastifiziertem granuliertem Material auf, der schematisch durch den Kreis 23 dargestellt ist.

Während des Plastifizierens rotiert hier die Plastifizier-und Einspritzschnecke und verschiebt sich axial in Richtung zum Hydromotor. Hierbei wird hydraulisches Medium aus dem Raum 24 des hydraulischen Zylinders über das in der entsprechenden Arbeitsstellung geschaltete 4/3 Wegeventil 25 zum nicht eingezeichneten Tank abgeführt.

Spätestens nach Beendigung des Plastifizierens, d.h. am Ende der Staudruckphase wird das 4/3 Wegeventil 26 in die entsprechende Arbeitsstellung geschaltet, so dass die Plastifizier- und Spritzeinheit in Richtung zur Spritzgießform verfahren wird und der Plastifizierzylinder gegen die Angußbohrung der feststehenden Formaufspannplatte ansteht.

Das 4/3-Wegeventil 27 ist in der hydraulischen Leitung zum Hydromotor 20 angeordnet. Durch Schalten des 4/3-Wegeventils 28 in die entsprechende Arbeitsstellung und Umschalten des Ventils 28' in die andere Schaltstellung wird die Spritzgießform zugefahren, sowie durch Schalten des 4/3-Wegeventils 29 in die entsprechende Schaltstellung die Formzuhaltekraft aufgebracht.

Nach Abkühlen des Spritzgußteils wird entsprechend weiteres Material plastifiziert und das nächste Spritzgußteil hergestellt. Generell ist ein Zufluß der Wegeventile mit der Leitung zur hydraulischen Pumpe und der andere Zufluß dieser Wegeventile mit der Tankleitung verbunden, was im Einzelnen nicht dargestellt ist.

Zum Schließen und Öffnen der Form ist ein Wegmeßsystem 30 in an sich bekannter Weise mit der verschiebbaren Formaufspannplatte gekoppelt.

Ein weiteres Wegmeßsystem 31 ist mit der Plastifizier-und Spritzeinheit gekoppelt.

In der Hydraulikleitung zum Zylinderraum 24 ist ein Druckfühler 32 angeordnet.

Der Plastifizierzylinder weist drei Temperaturfühler 33 - 35 für drei nicht dargestellte Heizbänder mit entsprechenden Schaltern (Aktoren) auf.

Ein weiterer Druckfühler 36 registriert den hydraulischen Druck in der Leitung zum Zylinderraum 37.

Die elektrischen Anschlüsse der Aktoren und Sensoren sind mit einer Ringleitung 40 und weiterhin untereinander verbunden. Dies ist symbolisch durch die beiden Schenkel 40' und 40" der einzelnen elektrischen Anschlüsse der Sensoren und Aktoren (Teilnehmern) dargestellt.

In der Ringleitung ist weiterhin der Notschalter 41 angeordnet. Weiterhin ist der Ringleitung der Controller 42 aufgeschaltet.

An dem Controller sind weiterhin ein Anschluss 43 für ein LAN sowie ein Anschluss 44 für ein Bedienterminal 45 vorgesehen.

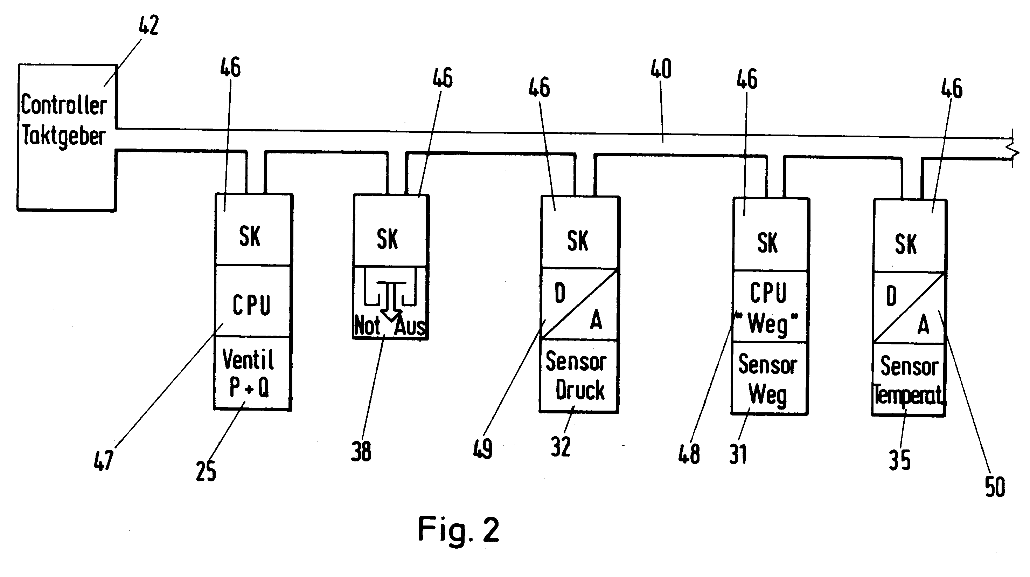

Die Figur 2 zeigt lediglich die Ringleitung 40 mit den Sensoren 31, 32 und 35 und dem Aktor 25 sowie den zugehörigen zwischen ihnen und der Ringleitung angeordneten und in Figur 1 der Übersichtlichkeit halber nicht dargestellten weiteren elektronischen Komponenten.

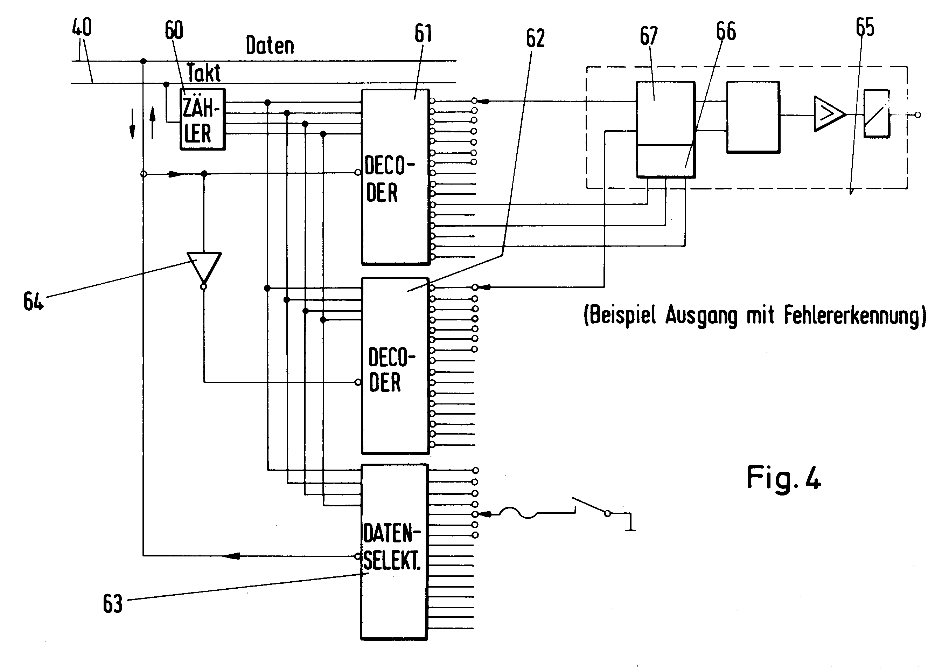

Zwischen der Ringleitung und jedem Sensor bzw. Aktor ist jeweils ein Schnittstellenkoppler 45 angeordnet, die im wesentlichen den gleichen Aufbau aufweisen, jedoch bezüglich des jeweiligen Anwendungsfalles unterschiedlich genützt werden. Der Aufbau der Schnittstellenkoppler ist in der Figur 4 anhand eines Ausführungsbeispieles erläutert.

Zwischen dem Schnittstellenkoppler und dem Aktor 25 ist ein Einchip-Rechner 47 angeordnet.

Zwischen dem jeweiligen Schnittstellenkoppler 46 und den Sensoren 31, 32 bzw. 35 ist ein spezieller Weg-Prozessor 48 bzw. ein Digital/Analog-Wandler 49 bzw. 50 angeordnet.

Der Controller 42 ist ein Takt- und Zeitgeber und übernimmt die nicht dezentralisierten Steuerungsaufgaben, wie z.B. die Betriebsarten (Automatik, Handbetrieb), das Vergeben von Fahraufträgen an die dezentralisierten geschlossenen Regelkreise und gibt die Schritte der Ablaufsteuerung vor.

Die Funktionsweise sei zunächst anhand des Einspritzvorganges erläutert:
Nach dem Plastifizieren hat die Plastifizier- und Einspritzschnecke die eine Sollposition erreicht, aus der sie in Richtung zur geschlossenen Spritzgießform in die andere Sollposition verschoben wird, wobei gleichzeitig ein Spritzgußteil gespritzt wird.

Es sei angenommen, dass der gesamte Hub in vier Abschnitte unterteilt ist, wobei in den ersten beiden Abschnitten eine geschwindigkeitsabhängige Steuerung (Geschwindigkeiten $V_1$ bzw. $V_2$) geschlossen und in den beiden anderen Abschnitten eine druckabhängige Steuerung (hydraul. Druck p1 bzw. p2) erfolgt und in den ersten drei Abschnitten des Hubes der Plastifizier- und Einspritzschnecke die Form mit plastifiziertem Material gefüllt wird, und während des dritten Abschnittes der Schwund des sich abkühlenden Spritzgußteiles durch weitere Materialzufuhr kompensiert wird.

Sämtliche Sensoren geben laufend ihre Ausgangssignale an die Ringleitung und somit an alle anderen Teilnehmer (Sensoren, Aktoren) ab.

Weiterhin gibt der Taktgeber Signale an die Ringleitung und somit gleichzeitig an alle Teilnehmer gemeinsam einen Zähltakt ab, der aus Impulsfolgen der gleichen Anzahl von Impulsen und dazwischenliegenden Pausen besteht.

Zur weiteren Vereinfachung sei angenommen, dass die Ringleitung außer der Leitung für die Stromversorgung, jeweils eine Leitung für den Zähltakt und eine Leitung für die Daten hat.

Da laufend die Sensoren Signale an die Ringleitung abgeben, der Status der Steuerung sich schrittweise ändert, stehen Impulsmengen mit unterschiedlicher Anzahl von Impulsen auf der Datenleitung an.

Aus der Zuordnung der Impulse läßt sich aufgrund des sich synchron wiederholenden Zähltaktes und der Daten auf der Datenleitung ergibt sich die Zuordnung der Daten zu den einzelnen Aktoren.

Die weitere Erklärung erfolgt anhand der Figut 3. Der Zähltakt besteht aus aufeinanderfolgenden, sich wiederholenden, durch die Pausen getrennten Worten aus dem vorliegenden Falle jeweils 128 Impulsen.

Die Worte auf der Datenleitung sind ebenfalls durch Pausen getrennt, die gleich lang mit den Pausen auf der Leitung für den Zähltakt sind.

Die Daten auf der Datenleitung werden wie folgt erzeugt: Zwischen jeweils zwei Pausen steht auf der Datenleitung zunächst eine vorgegebene konstante Spannung an. Sowohl der Taktgeber als auch die Sensoren und Aktoren können jeweils für die Dauer eines oder mehrerer Zähltaktimpulse diese Spannung auf Nullpotential durchschalten, wodurch eine eindeutige Zuordnung der Datenimpulse zu den Zähltaktimpulsen erreicht wird.
Die maximale Zeittaktfrequenz ist durch Laufzeitprobleme begrenzt.

Innerhalb eines Wortes auf der Datenleitung sind fest reservierte Impulse als Kontrollbits, Statusbits und Fehlererkennungsbits vorgesehen. Der Rest an Impulsen des jeweiligen Wortes wird den vorhandenen Sensoren und Aktoren zugeordnet.

Da eine feste Zuordnung der einzelnen möglichen Datenbits zum Zähltakt einerseits und den einzelnen Teilnehmern andererseits besteht, kann in den einzelnen Schnittstellenkopplern durch einfaches Mitzählen und gleichzeitiges Vergleichen der Daten auf der Datenleitung in jedem Schnittstellenkoppler jedes Wort nachgebildet werden. Das hierfür verwendete Datenregister besteht im einfachsten Fall aus einer einzigen binären Speicherzelle.

Die einzelnen Maßnahmen sind in der Datenverarbeitung bekannt und aus diesem Grunde im Folgenden nicht weiter erläutert.

Während die Plastifizier- und Einspritzschnekke sich zu den einzelnen Endpunkten der Abschnitte bewegt, werden über die Baueinheit, bestehend aus dem Schnittstellenkoppler, der CPU-Einheit (Einchip-Regler) und dem 4/3-Wegeventil 25, dieses ist ein ein- bis zweistufiges, in sich lagerückgeführtes Proportionalventil oder Servoventil ist, das sowohl den Durchsatz an hydraulischem Medium sowie die Strömungsrichtung des hydraulischen Mediums und den Druck regelt - entsprechend dem durch das Programm des Einchip-Rechners festgelegten Algorithmus, die über den Schnittstellenkoppler kontinuierlich gemeinsam anstehenden Daten der Wegmeß- und Drucksensoren zu den jeweils notwendigen Stellgrößen für das Regelventil 25 verarbeitet.

Während dieser Informationsverarbeitung müssen sämtliche anderen Informationen des gesamten Wortes beachtet werden um einem evtl. erforderlichen Abbruch aufgrund einer Notsituation gerecht werden zu können.

So müssen die Bits für Störmeldungen und die Statusanzeige beachtet werden.

Bereits im Schnittstellenkoppler werden an eigens hierfür reservierten Plätzen Schlüsselbits zum Zwecke der Fehlererkennung geprüft. Ein besonderer Vorteil besteht darin, dass keine Priorisierung in der Verarbeitung einzelner Bits der Wörter erforderlich ist und erstmalig ein starrer Buszuteilungsmechanismus gebildet ist, welcher somit synchron in der vorgegebenen Übertragungszeit arbeitet.

Ohne Zeitverlust kann z.B. der Einchip-Rechner 47 über den Schnittstellenkoppler 46 Signale bilden, um einen anderen Aktor zu betätigen.

Dies kann z.B. ein weiteres im Bypass geschaltetes Ventil zur Durchflusserhöhung im Hydraulikkreis der hydraulischen Steuerung sein. Hierdurch können allgemein vermaschte Regelkreise für die hydraulische Steuerung sowie auch die Führungsgrößen gebildet werden.

Die Figur 4 zeigt ein Ausführungsbeispiel für einen Schnittstellenkoppler, der aus an sich bekannten elektronischen Bauteilen besteht, die in der Figur 4 ersichtlichen Weise miteinander verknüpft sind. Er ist zur Vereinfachung für eine Wortlänge von 16 Bits dargestellt, und zwar in Abweichung von der Wortlänge von 128 Bits im Ausführungsbeispiel der Figur 1.

Mit 60 ist ein Zähler bezeichnet, dessen Ausgänge den Adresseneingängen der beiden Decodern 61 und 62 und dem Datenselektro 63 aufgeschaltet sind.

Weiterhin sind die Ausgänge des Zählers 60 über einen Negator 64 invertiert einem weiteren Dateneingang des Decoders 62 zugeführt.

Die Ausgänge des Decoders 61 werden programmierbar einer Ausgangsschaltung 65, die strichliert umrandet eingezeichnet ist, zugeführt, die eine Einrichtung zur Fehlererkennung 66 und einer Einrichtung zur Verriegelung 67 nach dem Feststellen einen Fehler aufweist.

Die Einrichtung zur Fehlererkennung dient zum Feststellen von Übertragungsfehlern.

Anstelle der einzelnen elektronischen Bauelemente in Figur 4 können selbstverständlich als integrierte Schaltung, z.B. Gate-Arrays, PLA's usw. mit dem Vorteil einer programmierbaren Verknüpfung verwendet werden.

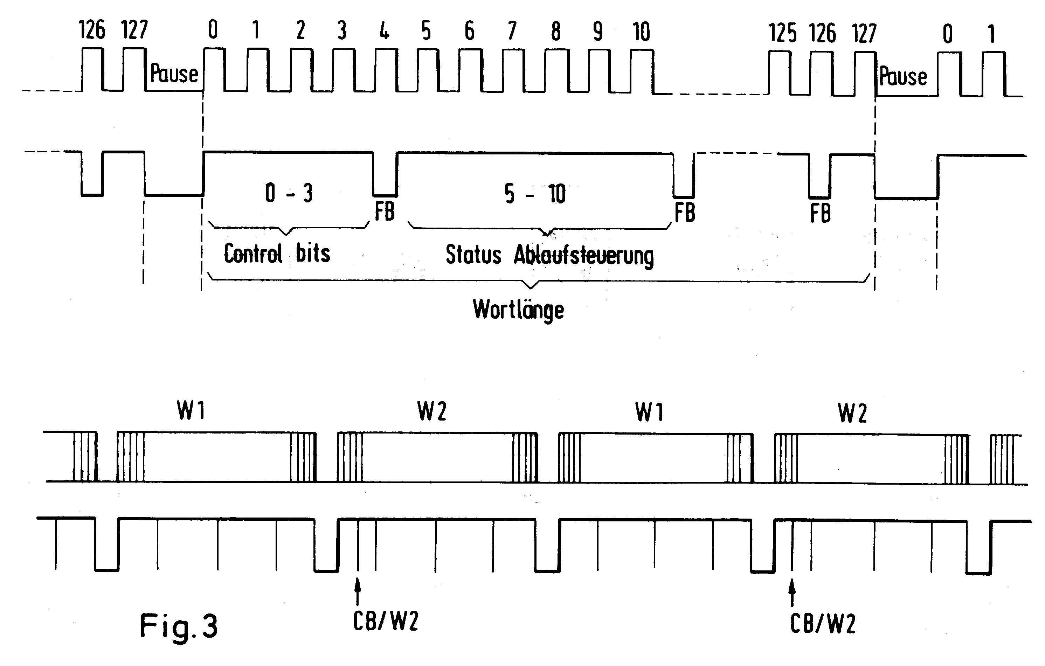

Kontrollbits (vgl. Fig. 3) dienen z.B. zur Kapazitätserweiterung der verfügbaren Datenbits, in dem, wie in Fig. 3 gezeigt, wechselweise die Worte W1 und W2 aufeinanderfolgend gebildet werden und somit die Gesamtzahl der verfügbaren Datenbits verdoppelt wird.

Darüberhinaus können zügig Sonderworte zur automatischen Fehlerdiagnose bis hin zur automatischen Zerstörung und Substitution an Ersatzaushängen defekter Schnittstellenkoppler durch die Kontrollbits gebildet werden.

Dadurch, dass allen Teilnehmern innerhalb eines Wortes gemeinsam alle Daten aller Teilnehmer zur Verfügung stehen, können auch sämtliche Ist-Werte zu jedem Zeitpunkt ohne Belastung der Übertragungsvorgänge dem Controller oder dem Terminal zur Anzeige zur Verfügung gestellt werden.

## Patentansprüche

1. Verfahren zum Steuern, bzw. Regeln von Spritzgießmaschinen, wobei Sensoren Ist-Werte abgeben, Steuerbefehle gebildet und von den Aktoren durchgeführt werden, dadurch gekennzeichnet, dass, an den Sensoren und Aktoren über eine Ring- bzw. Stichleitung jeweils sämtliche Informationen in aufeinanderfolgenden Worten anstehen, gemeinsam die Sensoren und/oder Aktoren ihre Informationen abgeben und in Abhängigkeit des Status des Programms die entsprechende Anzahl von Aktoren gemeinsam ihre Steuerbefehle durchführen.

2. Verfahren nach Anspruch 1 dadurch gekennzeichnet, dass Aktoren miteinander in Kommunikation stehen und zur Bildung von Steuerbefehlen Informationen austauschen.

3. Verfahren nach Anspruch 1 oder 2, dadurch gekennzeichnet, dass mindestens ein Teil der Informationen mit Prüfinformationen zu Gesamtinformationen zusammengefasst werden, die Gesamtinformationen daraufhin geprüft werden, ob die Prüfinformationen an den vorgegebenen Stellen sind und zutreffendenfalls die Gesamtinformationen weitergeleitet und/oder verarbeitet werden.

4. Vorrichtung zur Durchführung des Verfahrens nach einem der Ansprüche 1 bis 3, dadurch gekennzeichnet, dass alle Sensoren (31, 32, 35) und Aktoren (25) an eine gemeinsame Ring- bzw. Stichleitung (40) angeschlossen sind.

5. Vorrichtung nach Anspruch 4, dadurch gekennzeichnet, dass die Sensoren und Aktoren über Schnittstellenkoppler (46) mit der Ring- bzw. Stichleitung gekoppelt sind.

6. Vorrichtung nach Anspruch 5, dadurch gekennzeichnet, dass zwischen den Schnittstellenkopplern (46) und minestens einigen Aktoren CPU-Einneiten (47) angeordnet sind.

7. Vorrichtung nach Anspruch 6, dadurch gekennzeichnet, dass die Schnittstellenkoppler als Sender und/oder Empfänger ausgebildet sind.

## Claims

1. Process for controlling or regulating injection moulding machines, with sensors emitting actual values and control commands being formed and carried out by the actuators, characterized in that in each case all the information is available at the sensors and actuators in successive words by way of a ring line or spur line, the sensors and/or actuators emit their information together, and, in dependence on the status of the program, the corresponding number of actuators carry out their control commands together.

2. Process according to Claim 1, characterized in that actuators are in communication with each other and exchange information to form control commands.

3. Process according to Claim 1 or 2, characterized in that at least part of the information is combined with check information to give total information, the total information is then checked as to whether the check information is at the predetermined points and where appropriate the total information is passed on and/or processed.

4. Apparatus for carrying out the process according to one of Claims 1 to 3, characterized in that all sensors (31, 32, 35) and actuators (25) are connected to a common ring line or spur line (40).

5. Apparatus according to Claim 4, characterized in that the sensors and actuators are coupled by way of interface couplers (46) to the ring line or spur line.

6. Apparatus according to Claim 5, characterized in that CPU units (47) are arranged between the interface couplers (46) and at least some of the actuators.

7. Apparatus according to Claim 6, characterized in that the interface couplers are constructed as senders and/or receivers.

**Revendications**

1. Procédé pour la commande et respectivement la régulation de machines de moulage par injection, des détecteurs fournissant des valeurs effectives, des instructions de commande étant générées et exécutées par les acteurs, **caractérisée en ce** que toutes les informations sont respectivement disponibles sous la forme de mots consécutifs sur les détecteurs et acteurs par l'intermédiaire d'une ligne en boucle ou d'une ligne de dérivation, que les détecteurs et/ou acteurs transmettent ensemble leurs informations et que le nombre correspondant d'acteurs exécutent ensemble leurs instructions de commande en fonction de l'état du programme.

2. Procédé selon la revendication 1, caractérisée en ce que les acteurs communiquent les uns avec les autres et échangent des informations pour la formation d'instructions de commande.

3. Procédé selon l'une des revendications 1 ou 2, caractérisée en ce qu'au moins une partie des informations sont groupées avec des informations de contrôle en informations totales, que les informations totales sont vérifiées pour déterminer que les informations de contrôle se trouvent aux endroits prédéterminés et que dans l'affirmative les informations totales sont retransmises et/ou traitées.

4. Dispositif pour la mise en oeuvre du procédé selon l'une des revendications 1 à 3, caractérisé en ce que tous les détecteurs (31, 32, 35) et acteurs (25) sont raccordés à une ligne en boucle et respectivement une ligne de dérivation (40) commune.

5. Dispositif selon la revendication 4, caractérisé en ce que les détecteurs et acteurs sont couplés avec la ligne en boucle et respectivement la ligne de dérivation par l'intermédiaire de coupleurs d'interfaces (46).

6. Dispositif selon la revendication 5, caractérisé en ce qu'entre les coupleurs d'interfaces (46) et au moins quelques-uns des acteurs sont insérées des unités centrales (47).

7. Dispositif selon la revendication 6, caractérisé en ce que les coupleurs d'interfaces sont conformés en émetteurs et/ou en récepteurs.

Fig. 1

EP 0 325 692 B1

Fig. 2

Controller Taktgeber — 42

46

SK / CPU / Ventil P + Q — 25, 47

SK / Not-Aus — 38

SK / D A / Sensor Druck — 32, 49

SK / CPU "Weg" / Sensor Weg — 31, 48

SK / D A / Sensor Temperat — 35, 50

40

126 127    0 1 2 3 4 5 6 7 8 9 10    125 126 127    0 1

Pause

0 - 3    FB    5 - 10    FB    FB

Pause

Control bits      Status Ablaufsteuerung

Wortlänge

W1      W2      W1      W2

CB/W2          CB/W2

Fig.3

EP 0 325 692 B1

Daten

Takt

ZÄH-LER

DECO-DER

DECO-DER

DATEN-SELEKT.

(Beispiel Ausgang mit Fehlererkennung)

Fig. 4

EP 0 325 692 B1